Europäisches Patentamt

**European Patent Office**

**Office européen des brevets**

(19)

(11) Numéro de publication: **0 128 081**
**B1**

(12) # FASCICULE DE BREVET EUROPÉEN

(45) Date de publication du fascicule du brevet:
**14.01.87**

(51) Int. Cl.⁴: **F 16 D 65/56**

(21) Numéro de dépôt: **84401060.3**

(22) Date de dépôt: **23.05.84**

(54) **Moteur de frein à réglage automatique.**

(30) Priorité: **31.05.83 FR 8308975**

(43) Date de publication de la demande:
**12.12.84 Bulletin 84/50**

(45) Mention de la délivrance du brevet:
**14.01.87 Bulletin 87/3**

(84) Etats contractants désignés:
**DE GB IT NL SE**

(56) Documents cité:
**FR-A-1 447 464**
**FR-A-1 470 078**
**FR-A-1 492 363**
**GB-A-1 069 135**
**GB-A-1 109 445**

(73) Titulaire: **BENDIX France, 126, rue de Stalingrad,
F-93700 Drancy (FR)**

(72) Inventeur: **Carré, Jean- Jacques, 59 boulevard de
l'Est, F-93340 Le Raincy (FR)**
Inventeur: **Pressaco Pierre, 45 rue Emile Zola
Batiment C, F-93120 La Courneuve (FR)**

(74) Mandataire: **Poidatz, Emmanuel, Service Brevets
Bendix 44 rue François 1er, F-75008 Paris (FR)**

EP 0 128 081 B1

LIBER, STOCKHOLM 1987

## Description

La présente invention concerne les moteurs de frein à réglage automatique, du type comportant un système à vis-écrou dont l'allongement est commandé par un dispositif à roue dentée et cliquet sensible au déplacement axial relatif entre un piston de commande et un corps fixe recevant ledit piston, le cliquet étant associé à une première extériurité axialement au piston au moyen d'un pivot monté dans le piston, le cliquet comportant une rampe coopérant élastiquement avec une partie de butée fixe solidaire du corps pour transformer ledit déplacement axial relatif en mouvement de rotation du cliquet.

Un moteur de frein à réglage automatique de ce type est décrit dans le document FR-A-1 492 363. Dans ce document, le cliquet présente une configuration générale en U, et est monté articulé sur une extrémité du piston par les deux ailes du U solidaires chacune d'un pivot, le cliquet comportant en outre un bras élastique coopérant avec l'écrou qui s'étend dans le prolongement du piston, dans un agencement encombrant et délicat, ne garantissant pas, au montage, un positionnement correct relatif des composants du dispositif de réglage automatique et pouvant induire, en fonctionnement, un endommagement de ces derniers.

La présente invention a pour objet de proposer un moteur de frein à réglage automatique de conception ramassée et robuste et assurant un positionnement relatif correct et fiable entre le corps, le piston et le cliquet.

Pour ce faire, selon l'invention, le pivot est associé à une première extrémité du cliquet et comporte une portion en saillie susceptible de coulisser dans une rainure formée dans le corps.

Selon une caractéristique plus particulière de l'invention, le cliquet, formé typiquement par une plaque sensiblement plane, est partiellement logé dans la rainure.

Avec un tel agencement, le positionnement correct de l'ensemble du dispositif de rattrapage automatique est assuré, et le cliquet est correctement protégé, ce qui garantit un fonctionnement sûr et fiable du moteur de frein.

On décrira maintenant à titre d'exemple non limitatif cinq modes de réalisation de l'invention en se référant aux dessins annexés dans lesquels:

- la figure 1 est une vue en coupe partielle d'un moteur de frein réalisé conformément à l'invention et appliqué à la commande d'un frein à tambour;
- la figure 2 est une vue partielle agrandie selon la flèche A de la figure 1 montrant le dispositif de réglage automatique;
- la figure 3 est une vue en coupe selon la ligne 3-3 de la figure 2;
- la figuré 4 est une vue en bout partielle selon la flèche B de la figure 2;
- la figure 5 est une vue en coupe partielle d'un second mode de réalisation de l'invention;
- la figure 6 est une vue partielle agrandie du dispositif de réglage selon la flèche C de la figure 5;

- la figure 7 est une vue en coupe selon la ligne 7-7 de la figure 6;
- la figure 8 est une vue en bout selon la flèche D de la figure 6;
- la figure 9 est une vue similaire à la figure 2 pour un troisième mode de réalisation;
- la figure 10 est une vue en coupe selon la ligne 10-10 de la figure 9;
- la figure 11 est une vue en bout selon la flèche E de la figure 9;
- la figure 12 est une vue similaire à la figure 2 représentant un quatrième mode de réalisation;
- la figure 13 est une vue en coupe selon la ligne 13-13 de la figure 12; et
- la figure 14 est une vue en bout selon la flèche F de la figure 12;
- la figure 15 est une vue similaire à la figure 2 représentant un cinquième mode de réalisation;
- la figure 16 est une vue en coupe selon la ligne 16-16. de la figure 15; et
- la figure 17 est une vue en bout selon la flèche F' de la figure 15.

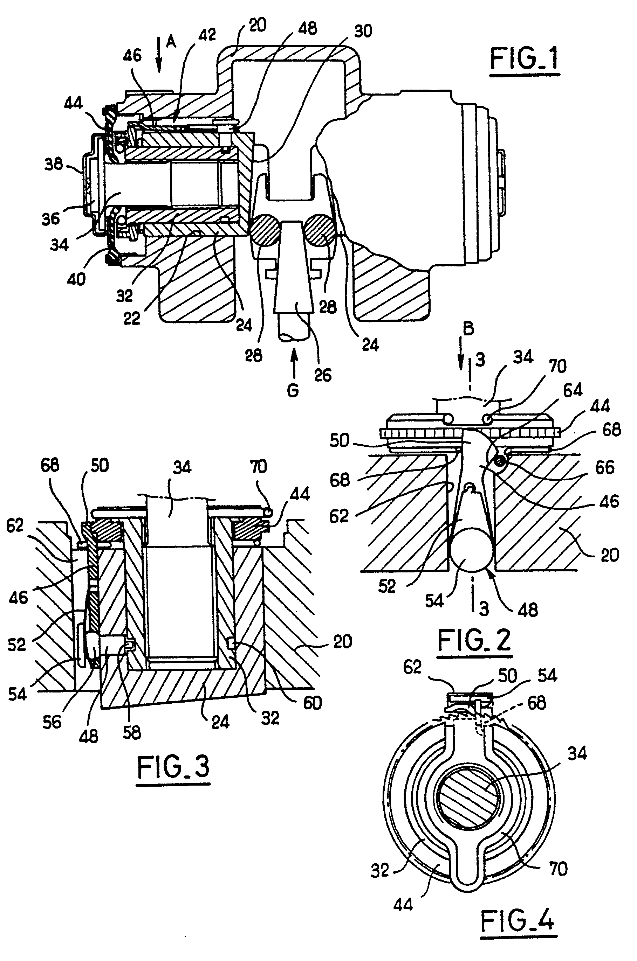

Le moteur de frein représenté sur la figure 1 est du type à commande à coin utilise en particulier dans les freins à tambour. Ce moteur de frein comporte d'une façon conventionnelle, un corps 20 comportant deux alésages 22 dans lesquels sont montés des pistons 24 susceptibles d'être écartés l'un de l'autre au moyen d'un coin 26 et de galets 28 agissant sur les fonds inclinés 30 des pistons 24 lorsque le coin 26 est déplacé dans le sens de la flèche G de la figure 1. Les pistons 24 par l'intermédiaire d'écrous 32 et de vis 34 sont susceptibles d'écarter les segments du frein à tambour (non représentés) mettant ainsi le frein en oeuvre. D'une façon conventionnelle, l'extrémité 36 de la vis 34 comporte un dispositif 38 empêchant la rotation de la vis par rapport au segment lors du fonctionnement du frein mais autorisant par rotation manuelle de la vis 34 de visser ou dévisser celle-ci. Egalement d'une façon conventionnelle, l'extrémité de l'alésage 22 est équipée d'un dispositif de protection 40 placé entre le corps 20 du moteur de frein et la vis 34 de manière à protéger l'intérieur du moteur de frein.

Conformément à l'invention, le moteur de frein comporte un dispositif de réglage automatique désigné dans son ensemble par la référence 42. En se référant aux figures 1, 2, 3 et 4 il apparaît que le réglage automatique 42 est formé d'une part par la vis 34 et l'écrou 32, et d'autre part une roue dentée 44 associée à l'écrou 32 et commandée par un cliquet 46 associé axialement au piston 24 au moyen d'un pivot 48. En se reportant aux figures 2 et 3, on voit que le cliquet 46 forme par une plaque sensiblement plane comporte une première extremite associée au pivot 48 de manière à ce que le cliquet suive les déplacements axiaux du piston 24, le pivot 48 étant fixé rigidement au piston 24.

L'autre extrémité du cliquet 46 comporte une portion repliée 50 de forme conjuguée à la denture de la roue dentée 44. Cette portion repliée 50 est appliquée élastiquement sur la denture au moyen d'un ressort 52 placé sous une tête 54 du pivot 48 et agissant radialement sur le cliquet 46. Comme le montre plus particulièrement la figure 3, le pivot 48 comporte une portion 56 en forme de portion de sphère et formant rotule permettant au cliquet 46 de basculer autour de cette portion 56 à l'encontre du ressort 52. On voit également sur la même figure 3 que le pivot 48 comporte une saillie 56 pénétrant dans une gorge 60 formée dans l'écrou 32 de manière à limiter les mouvements axiaux de l'écrou 32 par rapport au piston 24. Comme on le voit plus particulièrement sur les figures 2 et 3, une portion formant la tête 54 du pivot 48 est montée dans une rainure 62 formée dans le corps 20 du moteur de frein, le diamètre de la tête 54 étant tel que l'ensemble piston 24 et pivot 48 sont circonferentiellement positionnés par rapport au corps 20 et sont susceptibles de se déplacer axialement l'un par rapport à l'autre du fait de cette rainure 62. En se reportant à la figure 2, on voit que le cliquet 46 comporte une rampe 64 formée sur la tranche du cliquet et appliquée élastiquement sur un pion 66 formant partie fixe solidaire du corps 20 au moyen d'un ressort 68 enroulé autour de l'écrou 32 dont une extrémité est fixée au piston 24 et dont l'autre extrémité sollicite le cliquet 46 vers la droite en se référant à la figure 2. Dans ce mode de réalisation, la rampe 64 diverge par rapport au cliquet au fur et à mesure que l'on s'approche de l'autre extrémité du cliquet comportant la portion 50. En se référant aux figures 2, 3 et 4, on voit que la roue dentée 44 est associée à l'écrou 32 au moyen d'un ressort 70 permettant de faibles mouvements de rotation relatifs entre ladite roue dentée et l'écrou d'une façon connue en soi, par exemple telle que décrit dans le brevet français No. 1 447 464 déjà mentionné plus haut, ceci permet d'éviter d'endommager la portion repliée 50 ou la denture de la roue 44 si l'effort d'entraînement en rotation de l'écrou 32 est trop élevé.

Le frein qui vient d'être décrit à l'aide des figures 1 à 4 fonctionne de la manière suivante: lorsque le moteur de frein doit être actionné, une poussée est exercée sur le coin 26 dans le sens de la flèche G de la figure 1. Sous l'effet de cette poussée, le coin pénètre entre les deux galets 28 qui roulent d'une part sur le coin 26 et d'autre part sur les fonds 30 des pistons 24, et comme le coin et les ronds 30 sont inclinés, les pistons 24 sont écartés l'un de l'autre de manière à solliciter les segments de frein (non représentés). Le mouvement du piston 24 représenté sur la partie gauche de la figure 1 est donc vers la gauche au moment de l'actionnement du frein. Ce mouvement du piston entraîne l'ensemble du réglage automatique comprenant entre autre l'écrou, la vis et le cliquet grâce au pivot 48. En se reportant à la figure 2, on voit que le déplacement vers le haut du pivot 48 entraîne le mouvement vers le haut du cliquet 46, la roue dentée 44 se déplaçant également vers la haut sous la poussée du piston 24. Le ressort 68 appuyant la rampe 64 du cliquet 46 sur le pion 66 solidaire du corps 20, toute progression vers le haut du pivot 46 entraîne donc une rotation dans le sens des aiguilles d'une montre du cliquet 46. Si la progression axiale du piston 24 est suffisante, la portion 50 du cliquet 46 saute une dent de la roue dentée 44, le ressort 52 permettant à la portion 50 de rester appliquée sur le flanc de la dent puis de pénétrer dans le creux de la dent suivante. Au relâchement du freinage, lorsque le coin 26 est tire dans le sens inverse de la flèche G de la figure 1, les pistons 24 se rapprochent sous l'effet du ressort de rappel des segments (non représentés). Ce mouvement de recul dans le sens de la flèche B de la figure 2 du piston 24 et par conséquent du pivot 46 impose un mouvement dans le sens contraire des alguilles d'une montre à la portion 50 du cliquet 46 du fait de la rampe 64 appliquée sur le pion 66 et comme la portion 50 est engagée dans la denture de la roue dentée 44, celle-ci tourne de la valeur d'une dent entraînant en rotation l'écrou 32 qui fait progresser la vis 34 dans le sens de l'allongement. On a ainsi obtenu un réglage automatique de la course des pistons. Il est bien évident que si la course axiale des pistons est insuffisante pour donner au cliquet le débattement nécessaire pour passer une dent, celui-ci revient à sa position initiale sans effectuer le réglage. Si l'effort axial sur la vis est tel que le frottement entre vis 34 et écrou 32 ne permet pas la rotation de l'écrou 32, la roue dentée tourne par rapport d'une part au corps fixe 20 mais également par rapport à l'écrou 32 de la valeur angulaire d'une dent par déformation élastique du ressort 70 qui fera tourner ultérieurement l'écrou 32 lorsque l'effort excessif sur la vis 34 aura cessé.

Comme on le voit plus particulièrement sur la figure 2, la tête 54 du pivot 48 assure un guidage circonférentiel aussi bien au piston 24 qu'au cliquet 46 définissant ainsi la position relative de la rampe 64 et du pion 66 solidaire du corps fixe 20. En se reportant à la figure 3, on voit que le mouvement radial nécessaire à la portion 50 pour sauter les dents est autorisé par la forme en rotule de la portion 56 du pivot 48. Il apparait par ailleurs au vu des figures 1, 2 et 3 que l'ensemble du réglage automatique 42 est solidaire du piston 24 et peut être aisément démonté du moteur de frein par simple extraction du piston sans aucun démontage ni intervention à l'exception de la dépose du dispositif de protection 40. Ce sous-ensemble démontable en bloc permet un entretien facile si nécessaire du dispositif objet de l'invention.

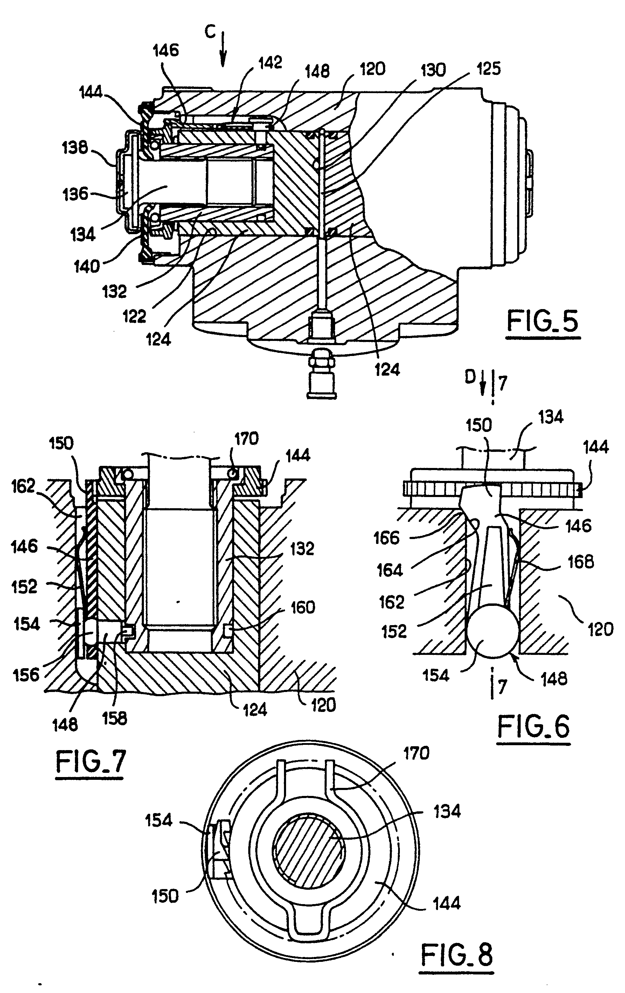

Les figures 5 à 8 représentent un deuxième mode de réalisation de l'invention dans lequel les mêmes pièces ayant les mêmes fonction portent le même numéro augmenté de 100.

A la différence du moteur de frein précédent celui-ci est à commande hydraulique et présente une chambre 125 susceptible d'être reliée à une source de pression (non représentée). Une augmentation de pression dans cette chambre 125 sollicite en écartement les deux pistons 124. Dans le présent mode de réalisation, le ressort maintenant en appui la rampe 164 du cliquet 146 sur une partie fixe 166 solidaire du corps du moteur de frein est réalisé au moyen d'un ressort 168 logé dans la rainure 162 et prenant appui sur celle-ci pour solliciter vers la gauche en se référant à la figure 6 la portion 150 du cliquet 146. Le ressort 168 est maintenu par la tête 154 du pivot 148. Le fonctionnement du système est identique à la différence près que lorsque le piston se déplace vers le haut entraînant le pivot 148 toujours en se référant à la figure 6, l'extrémité 150 du cliquet tourne dans le sens contraire des aiguilles d'une montre pour sauter une dent, le sens de la denture étant bien évidemment inverse de celle du mode de réalisation précédent.

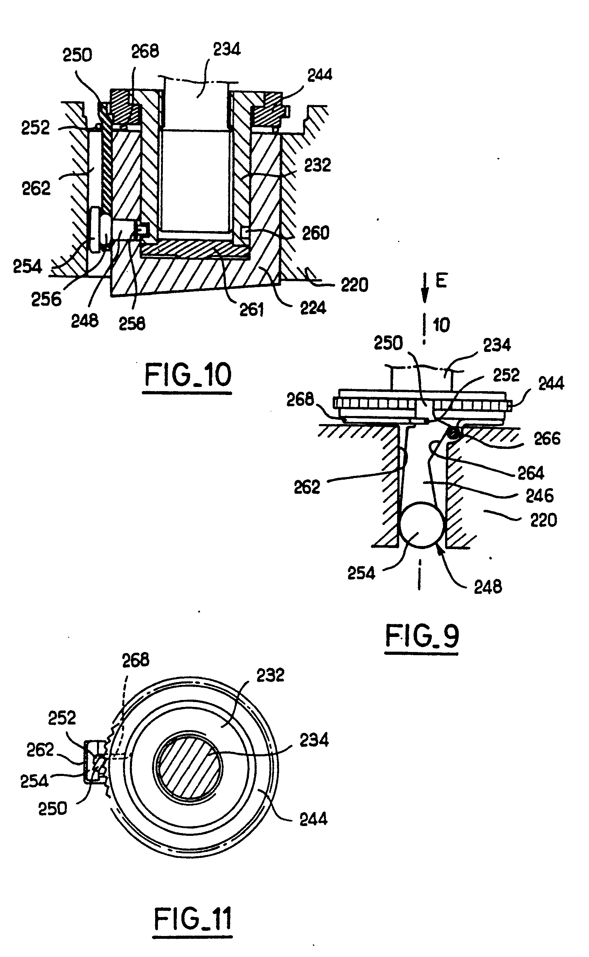

Dans le mode de réalisation représenté sur les figures 9 à 11, les mêmes éléments remplissant les mêmes fonctions portent les mêmes numéros augmentés de 200. Dans ce mode de réalisation, le cliquet 246 est sollicité en appui sur le pion 266 au moyen du ressort 268 entourant l'écrou 232. Ce ressort 268 comporte une extrémité repliée 252 qui sollicite la portion 250 du cliquet 246 en appui radial sur la denture de la roue dentée 244. D'autre part en se référant à la figure 11, on voit que la denture présente deux flancs inclinés. Sur la figure 10, on voit que l'écrou 232 prend appui sur le fond du piston 224 au travers d'un gain 261 favorisant la rotation de l'écrou par rapport au piston. Le fonctionnement de ce mode de réalisation est similaire à celui décrit en se référant aux figures 1 à 4 avec cependant deux différences, à savoir d'une part l'appui radial de la portion 250 sur la roue dentée 244 se fait à l'aide d'un même et unique ressort, d'autre part ce même ressort permet au cliquet de revenir sur la dent précédente du fait de l'inclinaison de la denture si l'effort de rotation de l'écrou 232 par rapport à la vis 234 excède une valeur prédéterminée définie par l'angle de la denture et l'effort radial de l'extrémité 252 du ressort 268. Cette solution évite le montage du ressort 70 du premier mode de réalisation.

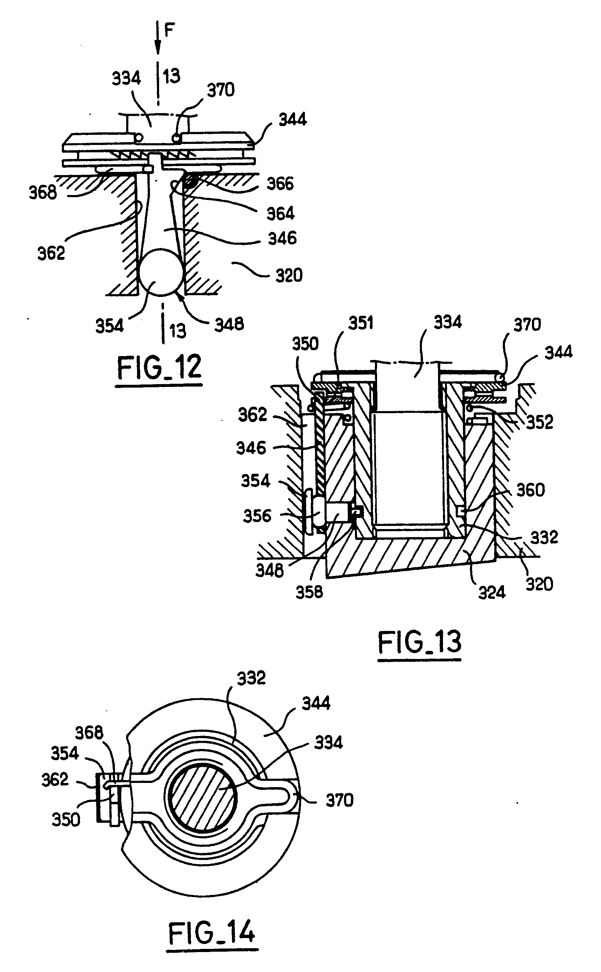

Sur les figures 12 à 14 on a représenté un quatrième mode de réalisation dans lequel les mêmes pièces remplissant les mêmes fonctions portent les mêmes numéros augmentés de 300. En se reportant aux figures 12 et 13, on voit que le cliquet 346 coopère par son extrémité 350 avec une couronne dentée 351 qui elle coopère avec la denture de la roue dentée 344, les deux dentures étant placées en vis-à-vis sur une circonférence complète et étant appliquées l'une contre l'autre au moyen d'un ressort de compression 352 placé entre le piston et la couronne 351. Une extrémité de ce ressort 352 se termine par une extrémité repliée 368 qui applique élastiquement la rampe 364 sur la partie fixe 366, le ressort 352 étant également sollicité en torsion. Le fonctionnement de ce moteur de frein est similaire à celui du premier mode de réalisation à ceci près que pour sauter une dent le cliquet 346 entraîne en rotation la couronne dentée 351 qui en comprimant axialement le ressort 352 peut se décaler angulairement par rapport à la roue dentée 344. Dans ce mode de realisation la fonction cliquet est assurée par le cliquet 346 et par la couronne dentée 351. Au relâchement du freinage la rampe 364 entraîne la couronne dentée 351 et par conséquent la roue dentée 344 qui provoque la rotation de l'écrou 332 et assure le réglage du moteur de frein.

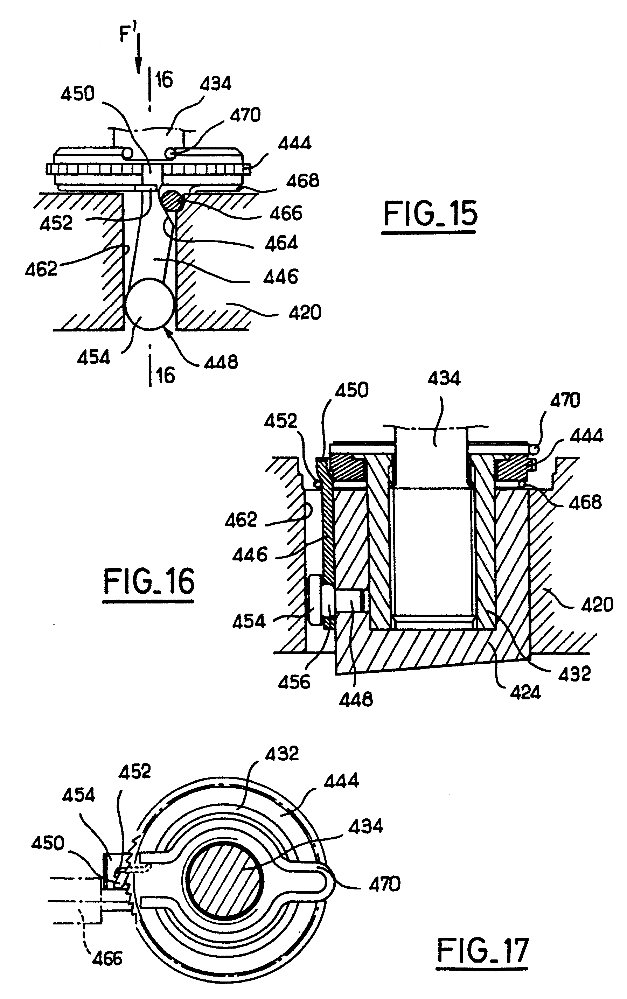

Sur les figures 15 à 17, on a représenté un cinquième mode de réalisation dans lequel les mêmes pièces remplissant les mêmes fonctions portent les mêmes numéros augmentés de 400. Dans ce mode de réalisation, la rampe 464 converge par rapport au cliquet 446 au fur et à mesure que l'on s'approche de l'autre extrémité du cliquet comportant la portion 450.

Le fonctionnement de ce cinquième mode diffère des précédents en ce que le réglage automatique intervient lors de la mise en oeuvre du frein du fait de l'inclinaison convergente de la rampe 464. Deux cas peuvent se présenter, ou bien l'effort de rotation de l'écrou 432 est suffisamment bas et alors celui-ci est entraîné par la roue dentée 464 ou bien l'effort de rotation de l'écrou 432 est trop élevé et alors le ressort 470 permet le mouvement relatir entre l'écrou 432 et la roue dentée 444, le réglage intervenant lorsque l'effort de rotation de l'ecrou devient inférieur à l'effort emmagasiné dans le ressort 470. Au relâchement du frein si la rotation de l'écrou est intervenue et que la course axiale de l'ensemble piston est suffisante la portion 450 saute une dent et est susceptible de régler à nouveau dès les mises en oeuvre suivantes.

L'avantage de ce système sur les précédents est que l'on dispose d'un effort plus important pour effectuer le réglage; en effet c'est la commande (coin ou hydraulique) du moteur de frein que provoque le réglage et non le ressort de rappel des segments (non représenté).

Il faut noter en se référant aux figures 15 et 17 que dans ce mode de réalisation, le pion 466 solidaire du corps 420 interdit le démontage du piston 424 du fait de la tête 454 du pivot 448. Le pion 466 est réalisé au moyen d'une vis vissée dans le corps et qu'il est nécessaire de déposer pour extraire ou mettre en place le piston équipé de son réglage automatique.

De la description qui précède on voit que le cliquet (46, 146, 246, 346-351, 446) est partiellement logé dans la rainure de guidage (62, 162, 262, 362, 462) formée dans le corps (20, 120, 220, 320, 420) du moteur de frein; il est par conséquent correctement protégé et comme il est réalisé à l'aide d'une lame sensiblement plane, sa fabrication en est aisée et rend le dispositif particulièrement fiable.

## Revendications

1. Moteur de frein à réglage automatique (42, 142, 242, 342, 442), comportant un système à vis-écrou (32-34, 132-134, 232-234, 332-334, 432-434) dont l'allongement est commandé par un dispositif à roue dentée (44, 144, 244, 344, 444) et cliquet (46, 146, 246, 346-351, 446) sensible au déplacement axial relatif entre un piston de commande (24, 124, 224, 324, 424) et un corps fixe (20, 120, 220, 320, 420) recevant ledit piston (24, 124, 224, 324, 424), le cliquet étant associé à une première etrémité axialement au piston au moyen d'un pivot (48, 148, 248, 348, 448) monté dans le piston, le cliquet comportant une rampe (64, 164, 264, 364, 464) coopérant élastiquement avec une partie de butée fixe (66, 166, 266, 366, 466) solidaire du corps pour transformer ledit déplacement axial relatif en mouvement de rotation du cliquet, caractérisé en ce que le pivot (48; 148; 248; 348; 448) comporte une portion en saillie (54, 154, 254, 354, 454) susceptible de coulisser dans une rainure (62, 162, 262, 362, 462) formée dans le corps (20, 120, 220, 320, 420).

2. Moteur de frein selon la revendication 1, caractérisé en ce que le cliquet (46, 146, 246, 346-351, 446) est partiellement logé dans la rainure (62, 162, 262, 362, 462).

3. Moteur de frein selon la revendication 2, caractérisé en ce que le cliquet (46, 146, 246, 346, 446) est formé par une plaque sensiblement plane comportant une seconde extrémité (50, 150; 250; 350; 450) coopérant avec la roue dentée (44, 144, 244, 444), et une zone centrale formant ladite rampe (64, 164, 264, 464).

4. Moteur de frein selon la revendication 3, caractérisé en ce que la portion en saillie du pivot forme une rotule (56; 156; 256; 356; 456) avec laquelle coopère en engagement la première extrémité du cliquet, des moyens élastiques étant prévus pour solliciter au moins radialement le cliquet en engagement élastique par sa seconde extrémité avec la roue dentée.

5. Moteur de frein selon la revendication 4, caractérisé en ce qu'il comprend un premier ressort (52, 152) maintenu par le pivot (48, 148) et placé dans ladite rainure (62, 162) et appliquant radialement et élastiquement le cliquet (46, 146) sur la zone dentée (44, 144).

6. Moteur de frein selon la revendication 5, caractérisé en ce qu'il comprend un second ressort (68, 168) prenant appui sur le piston (24, 24) et appliquant élastiquement la rampe (64, 164) sur la partie de butée fixe (66, 166).

7. Moteur de frein selon la revendication 4, caractérisé en ce qu'il comprend un ressort (268, 468) prenant appui sur le piston (224, 424) et appliquant élastiquement la rampe (264, 464) sur la partie de butée fixe (266, 466), le ressort (268, 468) comportant une extrémité repliée (252, 452) appliquant radialement et élastiquement le cliquet (246, 446) sur la roue dentée (244, 444).

8. Moteur de frein selon la revendication 7, caractérisé en ce que la roue dentée (244) présente pour chaque dent deux flancs inclinés permettant à une portion repliée de la seconde extrémité du cliquet (250), de s'écarter radialement de la roue dentée (244) à l'encontre dudit ressort (268-252) lorsque l'effort pour la mise en rotation de la roue dentée (244) par la coopération rampe (264)/partie de butée fixe (266) excède une valeur prédéterminée par l'effort du ressort (268-252) et la pente desdits flancs.

9. Moteur de frein selon la revendication 3, caractérisé en ce que la seconde extrémité (350) du cliquet (346) coopère en entraînement avec une couronne dentée (351) coopérant élastiquement avec la roue dentée (244), la denture de la couronne (351) faisant face axialement à la denture de la roue dentée (244), au moyen d'un ressort de compression (352) placé entre le piston (324) et la couronne dentée (351).

10. Moteur de frein selon la revendication 9, caractérisé en ce que le ressort de compression (352) comporte une extrémité repliée (368) qui applique élastiquement, par torsion dudit ressort (352), la rampe (364) sur la partie de butée fixe (366).

11. Moteur de frein selon l'une quelconque des revendications 1 à 10, caractérisé en ce que le pivot (48, 148, 248, 348) comporte une partie (58, 158, 258, 358) faisant saillie à l'intérieur du piston (24, 124, 224, 324) et pénétrant dans une gorge annulaire (60, 160, 260, 360) formée dans l'écrou (34, 134, 234, 334).

12. Moteur de frein selon la revendication 11, caractérisé en ce que le piston (24, 124, 224, 324) et le dispositif de réglage automatique (42, 142, 242, 342) forment un sous-ensemble démontable en bloc.

## Patentansprüche

1. Bremsmotor mit selbsttätiger Nachstellung (42, 142, 242, 342, 442), mit einem Schrauben-Mutter-System (32-34, 132-134, 232-234, 332-343, 432-434), dessen Verstellung von einem Klinkenmechanismus mit einem Klinkenrad (44, 144, 244, 344, 444) und einer Klinke (46, 146, 246, 346-351, 446) gesteuert wird, der auf eine Axialverschiebung zwischen einem Steuerkolben (24, 124, 224, 324, 424) und einem den Kolben (24, 124, 224, 324, 424) aufnehmenden ortsfesten Gehäuseteil (20, 120, 220, 320, 420) anspricht, wobei die Klinke mit einem ersten Ende mittels eines im Kolben gelagerten Schwenkzapfens (48, 148, 248, 348, 448) dem Kolben axial zugeordnet ist und eine Rampe (64, 164, 264, 364, 464) aufweist, die elastisch mit einem mit dem Gehäuseteil fest verbundenen ortsfesten Anschlagteil (66, 166, 266, 366, 466) zusammenwirkt, um die Axialverschiebung in eine Drehbewegung der Klinke umzuwandeln, dadurch gekennzeichnet, daß der Schwenkzapfen (48; 148; 248; 348; 448) einen vorstehenden Abschnitt (54, 154, 254, 354, 454) aufweist, der in einer Nut (62, 162, 262, 362, 462) im Gehäuseteil (20, 120, 220, 320, 420) gleitet.

2. Bremsmotor nach Anspruch 1, dadurch gekennzeichnet, daß die Klinke (46, 146, 246, 346-351, 446) in der Nut (62, 162, 262, 362, 462) teilweise untergebracht ist.

3. Bremsmotor nach Anspruch 2, dadurch gekennzeichnet, daß die Klinke (46, 146, 246, 346, 446) von einer im wesentlichen ebenen platte gebildet wird, die ein mit dem Klinkenrad (44, 144, 244, 444) zusammenwirkendes zweites Ende (50; 150; 250; 350; 450) und einen die Rampe (64, 164, 264, 464) bildenden zentralen Bereich aufweist.

4. Bremsmotor nach Anspruch 3, dadurch gekennzeichnet, daß der vorstehende Abschnitt des Schwenkzapfens eine Gelenkkugel (56; 156; 256; 356; 456) bildet, mit der das erste Ende der Klinke in Eingriff steht, wobei elastische Mittel vorgesehen sind, die die Klinke zumindest in radialer Richtung mittels seines zweiten Endes mit dem Klinkenrad elastisch in Eingriff drücken.

5. Bremsmotor nach Anspruch 4, dadurch gekennzeichnet, daß er eine erste Feder (52, 152) aufweist, die von dem Schwenkzapfen (48, 148) gehalten wird, in der Nut (62, 162) angeordnet ist und die Klinke (46, 146) radial und elastisch gegen den zentralen Bereich (44, 144) andrückt.

6. Bremsmotor nach Anspruch 5, dadurch gekennzeichnet, daß er eine zweite Feder (68, 168) aufweist, die an dem Kolben (24, 124) angreift und die Rampe (64, 164) elastisch gegen das ortsfeste Anschlagteil (66, 166) andrückt.

7. Bremsmotor nach Anspruch 4, dadurch gekennzeichnet, daß er eine Feder (268, 468) aufweist, die am Kolben (224, 424) anliegt und die Rampe (264, 464) gegen das ortsfeste Anschlagteil (266, 466) elastisch andrückt, wobei die Feder (268, 468) ein umgebogenes Ende (252, 452) aufweist, das die Klinke (246, 446) radial und elastisch gegen das Klinkenrad (244, 444) andrückt.

8. Bremsmotor nach Anspruch 7, dadurch gekennzeichnet, daß das Klinkenrad (244) für jeden Klinkenzahn zwei geneigte Flanken aufweist, die einem umgebogenen Abschnitt des zweiten Endes der Klinke (250) sich entgegengesetzt zu der Feder (268-252) von dem Klinkenrad (244) radial zu entfernen erlaubt, wenn die Kraft, die durch Zusammenwirken der Rampe (264) und des ortsfesten Anschalgteils (266) das Klinkenrad (244) in Drehung versetzt, einen Wert überschreitet, der durch die Kraft der Feder (268-252) und die Steigung der Flanken bestimmt wird.

9. Bremsmotor nach Anspruch 3, dadurch gekennzeichnet, daß das zweite Ende (350) der Klinke (346) mit einem Zahnkranz (351) in Antriebsverbindung steht, der mit dem Klinkenrad (244) elastisch zusammenwirkt, wobei die Verzahnung des Zahnkranzes (351) mittels einer zwischen dem Kolben (324) und dem Zahnkranz (351) angeordneten Druckfeder (352) der Verzahnung des Klinkenrades (244) stirnseitig axial zugeordnet wird.

10. Bremsmotor nach Anspruch 9, dadurch gekennzeichnet, daß die Druckfeder (352) ein umgebogenes Ende (368) aufweist, das durch Torsion der Feder (352) die Rampe (364) gegen das ortsfeste Anschlagteil (366) elastisch andrückt.

11. Bremsmotor nach einem der Ansprüche 1-10, dadurch gekennzeichnet, daß der Schwenkzapfen (48-148, 248, 348) einen Abschnitt (58, 158, 258, 358) aufweist, der in das Innere des Kolbens (24, 124, 224, 324) vorsteht und in eine Ringnut (60, 160, 260, 360) in der Mutter (34, 134, 234, 334) greift.

12. Bremsmotor nach Anspruch 11, dadurch gekennzeichnet, daß der Kolben (24, 124, 224, 324) und die selbsttätige Nachstellvorrichtung (42, 142, 242, 342) eine als Block demontierbare Baueinheit bilden.

## Claims

1. A brake motor having an automatic adjustment device (42, 142, 242, 342, 442), comprising a screw-nut-system (32-34, 132, 134, 232-234, 332-334, 432-434), the extension of which is controlled by a device having a ratchet wheel (44, 144, 244, 344, 444) and a pawl (46, 146, 246, 346-351, 446) responsive to a relative axial displacement between a control piston (24, 124, 224, 324, 424) and a fixed body (20, 120, 220, 320, 420) receiving said piston (24, 124, 224, 324, 424), the pawl being associated at a first extremity axially to the piston by means of a pivot (48, 148, 248, 348, 448) mounted in the piston, the pawl comprising a ramp (64, 164, 264, 364, 464) resiliently cooperating with a fixed abutment portion (66, 166, 266, 366, 466) fixed to the body for transforming said relative axial displacement into a rotational movement of the pawl, characterized in that the pivot (48; 148; 248; 348; 448) comprises a projecting portion (54, 154, 254, 354, 454) adapted to slide in a groove (62, 162, 262, 362, 462) formed in the body (20, 120, 220, 320, 420).

2. Brake motor according to claim 1, characterized in that the pawl (46, 146, 246, 346-351, 446) is partially received in the groove (62, 162, 262, 362, 462).

3. Brake motor according to claim 2, characterized in that the pawl (46, 146, 246, 346, 446) is formed by a substantially plane plate comprising a second extremity (50, 150; 250; 350; 450) cooperating with the ratchet wheel (44, 144, 244, 444) and a central zone forming said ramp (64, 164, 264, 464).

4. Brake motor according to claim 3, characterized in that the projecting portion of the pivot forms a spherical member (56; 156; 256; 356; 456) with which the first extremity of the pawl is in engagement, resilient means being provided to bias the pawl at least radially into resilient engagement with the ratchet wheel by its second extremity.

5. Brake motor according to claim 4, characterized in that it comprises a first spring (52, 152) held by the pivot (48, 146) and disposed in said groove (62, 162) and radially and resiliently urging the pawl (46, 146) against the ratchet zone (44, 144).

6. Brake motor according to claim 5, characterized in that it comprises a second spring (68, 168) engaging the piston (24, 124) and resiliently urging the ramp (64, 164) against the fixed abutment portion (66, 166).

7. Brake motor according to claim 4, characterized in that it comprises a spring (268, 468) engaging the piston (224, 424) and resiliently urging the ramp (264, 464) against the fixed abutment portion (266, 466), the spring (268, 468) comprising a rebent extremity (252, 452) radially and resiliently urging the pawl (246, 446) against the ratchet wheel (244, 444).

8. Brake motor according to claim 7, characterized in that the ratchet wheel (244) has teeth each provided with two inclined flanks permitting a rebent portion of the second extremity of the pawl (254) to radially move away from the ratchet wheel (244) opposite to said spring (268-252) when the force for rotating the ratchet wheel (244) by cooperation of the ramp (264) and the fixed abutment portion (266) exceeds a value predetermined by the force of the spring (268-252) and the inclination of said flanks.

9. Brake motor according to claim 3, characterized in that the second extremity (350) of the pawl (346) cooperates by engagement with a toothed ring (351) resiliently cooperating with the ratchet wheel (244), the teeth of the ring (351) being axially urged against the teeth of the ratchet wheel (244) by means of a compression spring (352) disposed between the piston (324) and the toothed ring (351).

10. Brake motor according to claim 9, characterized in that the compression spring (352) comprises a rebent extremity (368) which resiliently urges the ramp (364) by torsion of said spring (352) against the fixed abutment portion (366).

11. Brake motor according to any of claims 1 to 10, characterized in that the pivot (48, 148, 248, 348) comprises a portion (58, 158, 258, 358) projecting into the interior of the piston (24, 124, 224, 324) and engages into an annular groove (60, 160, 260, 360) formed in the nut (34, 134, 234, 334).

12. Brake motor according to claim 11, characterized in that the piston (24, 124, 224, 324) and the automatic adjustment device (42, 142, 242, 342) form a subassembly which is dismountable as a unit.

0 128 081

FIG_1

FIG_2

FIG_3

FIG_4

1

FIG.5

FIG.7

FIG.6

FIG.8

FIG_10

FIG_9

FIG_11

FIG_12

FIG_13

FIG_14

FIG_15

FIG_16

FIG_17